(19) Europäisches Patentamt
European Patent Office
Office européen des brevets

(11) **EP 2 515 052 A1**

(12) **EUROPÄISCHE PATENTANMELDUNG**

(43) Veröffentlichungstag:
24.10.2012 Patentblatt 2012/43

(51) Int Cl.:
*F24J 2/54* *(2006.01)*   *F24J 2/38* *(2006.01)*

(21) Anmeldenummer: 11003403.0

(22) Anmeldetag: 23.04.2011

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Solar Tracking Systems SL**
**07003 Palma de Mallorca (ES)**

(72) Erfinder:
• **Rodriguez Daverio Ferreyra, Rodolfo Eduardo**
**07110 Bunyola (Mallorca) (ES)**
• **Brancolino, Adriàn Ricardo**
**07014 Palma de Mallorca (ES)**

(74) Vertreter: **Walther, Walther & Hinz GbR**
**Heimradstraße 2**
**D-34130 Kassel (DE)**

(54) **Solartracker**

(57)     Solartracker umfassend einen Fuß (2) sowie ein mit dem Fuß (2) verbundenes Gestell (10), wobei das Gestell (10) durch den Fuß (2) motorbetrieben in zwei Raumrichtungen beweglich aufgenommen ist, wobei das Gestell (10) mehrere Konzentratormodule (20,20a) aufnimmt, wobei ein jedes Konzentratormodul (20,20a) zur individuellen Ausrichtung zur Sonne unabhängig von den benachbarten Konzentratormodulen in zwei Raumrichtungen beweglich in dem Gestell (10) angeordnet ist.

Fig. 1

EP 2 515 052 A1

**Beschreibung**

Die Erfindung betrifft einen Solartracker umfassend einen Fuß, sowie ein mit dem Fuß verbundenes Gestell, wobei das Gestell durch den Fuß motorbetrieben in zwei Raumrichtungen beweglich aufgenommen ist. Gegenstand der Erfindung ist ebenfalls ein Verfahren zum Betrieb eines Solartrackers.

Solartracker der eingangs genannten Art sind hinreichend bekannt. Diese Solartracker, auch als Solarbäume bezeichnet, zeichnen sich im Einzelnen dadurch aus, dass diese Solartracker in der Lage sind, durch Veränderung sowohl ihres Azimut- und auch ihres Neigungswinkels der Sonne zu folgen und sich so optimal zur Sonne auszurichten. Solche Solarbäume nehmen eine Mehrzahl von Photovoltaikmodulen auf, wobei die Photovoltaikmodule Flächen von bis zu mehreren m$^2$ aufweisen. Der Wirkungsgrad derartiger Photovoltaikmodule ist verhältnismäßig gering.

Nun sind allerdings neben solchen normalen Photovoltaikmodulen sogenannte Konzentratorzellen bekannt. Bei Konzentratorzellen auch als Konzentratorphotovoltaik bezeichnet, oder abgekürzt CPV (concentrated photovoltaik) wird Halbleiterfläche eingespart, indem das Sonnenlicht meist durch Fresnellinsen fokussiert auf ein entsprechend großes Halbleitermodul konzentriert wird. Fresnellinsen sind im Vergleich zu Halbleitermodulen bezogen auf die Fläche wesentlich preiswerter. Es kann somit zu geringeren Kosten die Sonneneinstrahlung einer größeren Fläche ausgenutzt werden. Zumeist werden sogenannte Mehrfachsolarzellen verwendet, die noch zuverlässig bei mehr als dem 500-fachen der Sonnenintensität arbeiten. Allerdings müssen solche Konzentratorzellen dem Sonnenstand nachgeführt werden, damit ihre Optik die Sonnenstrahlen auf die Zellen bündeln kann. Mit solchen Konzentratorzellen werden Wirkungsgrade von etwa 40% erreicht.

Es sind allerdings nicht nur Konzentratormodule der eingangs genannten Art in Form von CPV's bekannt, mit denen elektrische Energie erzeugt werden kann, sondern es sind vielmehr auch Konzentratormodule denkbar, die unter Einsatz von sogenannten Fresnellinsen beispielsweise Flüssigkeiten oder Gase in entsprechenden Rezeptoren erhitzen, um mithilfe solcher erhitzten Gase oder Flüssigkeiten Energie zu erzeugen. Unter dem Begriff "Rezeptor" werden im folgenden nicht nur CPV's verstanden, sondern sämtliche Elemente, die zur Umsetzung von Energie auf eine Bündelung von Lichtstrahlen angewiesen sind, bzw.

Hybridmodelle, mit denen die Gewinnung von thermischer und elektrischer Energie parallel erfolgt.

Die der Erfindung zugrunde liegende Aufgabe besteht demzufolge darin, bei einem Solartracker mit Konzentratormodulen den Wirkungsgrad zu erhöhen, wobei diese Konzentratormodule von der Art der Energieumsetzung unterschiedliche Rezeptoren aufweisen können, die also beispielsweise auch CPV's sein können.

Zur Lösung der Aufgabe wird erfindungsgemäß vorgeschlagen, bei einem Solartracker mit einem Gestell, in dem eine Mehrzahl von Konzentratormodulen angeordnet sind, ein jedes Konzentratormodul zur individuellen Ausrichtung zur Sonne unabhängig von den benachbarten Konzentratormodulen in zwei Raumrichtungen beweglich in dem Gestell anzuordnen. Das heißt, die Konzentratormodule sind unabhängig voneinander in dem Gestell und auch relativ zum Gestell beweglich angeordnet, um hierdurch eine optimale Ausrichtung des jeweiligen Konzentratormoduls zur Sonne erreichen zu können. Dies vor folgendem Hintergrund:

Das Gestell eines solchen Solartrackers, das nach Art eines Rahmens ausgebildet ist, soll eine Mehrzahl der Konzentratormodule aufnehmen. Aufgrund des Eigengewichts des Gestells und auch aufgrund äußerer Einflüsse wie z. B. Wind und auch Temperaturdifferenzen werden diese Konzentratormodule kontinuierlich ihre Lage relativ zueinander und auch relativ zu dem rahmenförmigen Gestell verändern. Selbst wenn ursprünglich die einzelnen Konzentratormodule in dem Rahmen optimal zur Sonne ausgerichtet wurden, wird sich dies bereits aufgrund des Eigengewichts und äußerer Einflüsse ändern. Insofern ist man bislang davon ausgegangen, dass die Anordnung solcher Konzentratormodule in einem Gestell eines Solartrackers nicht notwendigerweise zu einer Erhöhung des Wirkungsgrades in der Form führt, dass sämtliche in dem Gestell angeordneten Konzentratormodule jeweils bei ihrem optimalen Wirkungsgrad arbeiten. Es wird vielmehr davon ausgegangen, dass einzelne dieser Konzentratormodule durchaus mit ihrem optimalen Wirkungsgrad arbeiten, d. h. eine optimale Stellung zur Sonne aufweisen, eine Mehrzahl anderer Konzentratormodule aber eine gewisse Fehlstellung relativ zur Sonne aufweisen, bei der die Module mit verringertem Wirkungsgrad arbeiten, wenn sie überhaupt Energie erzeugen. Um eine solche Fehlstellung zu minimieren, müsste die Konstruktion extrem steif ausgeführt werden. Darüber hinaus ist die Justierung sehr aufwendig. Beides führt zu hohen Kosten. Dadurch nun, dass erfindungsgemäß die einzelnen Konzentratormodule zum einen relativ zueinander und auch relativ zum Gestell verstellbar in dem Gestell angeordnet sind, kann ein jedes Konzentratormodul für sich in die optimale Stellung zur Sonne überführt werden. Dies stellt eine kostengünstige Lösung dar, da leichte Fehlstellungen egal aufgrund welcher Umstände, selbstständig korrigiert werden können.

Vorteilhafte Merkmale und Ausgestaltungen ergeben sich aus den Unteransprüchen.

So ist insbesondere vorgesehen, dass das Konzentratormodul durch ein Zweiachsengelenk mit dem Gestell in Verbindung steht. Ein solches Zweiachsengelenk kann beispielsweise ein Kugelgelenk sein, an dem das Konzentratormodul angeordnet ist. Denkbar ist auch die Anlenkung durch ein elastisches Gelenk, z. B. eine Feder oder ein Elastomermodul. Zur Verstellung des Konzentratormoduls um das Zweiachsengelenk kann vorgesehen sein, dass das Konzentratormodul durch zwei Stellmotoren mit dem Gestell in Verbindung steht.

Es wurde an anderer Stelle bereits darauf hingewiesen, dass aus dem Stand der Technik sogenannte Konzentratorzellen bekannt sind, auch als CPV bezeichnet, bei denen eine Fresnellinse vorgesehen ist, wobei im Zentrum der Fresnellinse beabstandet zur Fresnellinse eine Solarzelle als Rezeptor angeordnet ist. Denkbar ist allerdings ebenfalls, als Rezeptor ein Element vorzusehen, das z. B. als Röhrchen die Erhitzung eines darin befindlichen Gases oder einer Flüssigkeit ermöglicht. Das heißt der Rezeptor kann zum einen als Photovoltaikmodul oder als Solar-Thermieelement ausgebildet sein.

Nach einem besonders vorteilhaften Merkmal der Erfindung ist vorgesehen, dass jedem Konzentratormodul ein lichtempfindlicher Sensor zugeordnet ist, der durch eine Regelung mit den Stellmotoren des Konzentratormoduls in Verbindung steht. Durch den lichtempfindlichen Sensor kann das Konzentratormodul durch die Stellmotoren in Verbindung mit dem Gelenk z. B. das Kugelgelenk in eine optimale Stellung zur Sonne ausgerichtet werden. Hierbei ist vorteilhaft vorgesehen, dass der lichtempfindliche Sensor mit dem Konzentratormodul insbesondere durch eine Halterung starr verbunden ist, wobei der lichtempfindliche Sensor auf der Halterung durch eine eigene Schwenkeinrichtung um zwei senkrecht zueinander stehenden Achsen relativ zum Konzentratormodul verstellbar ist. Somit ist der lichtempfindliche Sensor durch die Regelung mit den Stellmotoren des Konzentratormoduls verbunden; der lichtempfindliche Sensor steht darüber hinaus auch durch seine Schwenkeinrichtung auf der Halterung mit der Regelung in Verbindung. Das Zusammenwirken der Regelung mit der Schwenkeinrichtung einerseits und den Stellmotoren andererseits zur Ausrichtung des Konzentratormoduls zur Sonne wird später beschrieben.

Der lichtempfindliche Sensor umfasst einen Grundkörper zur Aufnahme von mehreren LED's, wobei die LED's zumindest über einen größeren Teil ihrer räumlichen seitlichen Erstreckung z. B. durch mindestens einen Teller abgedeckt sind, wobei der Teller über den LED's beabstandet am Grundkörper angeordnet ist. Hierbei ist die Größe des Tellers derart gewählt, dass bei genau zentrischer Ausrichtung des Grundkörpers oder des Tellers auf die Sonne der Grundkörper oder der Teller die Sonne im Wesentlichen abdeckt. Die Leistung der einzelnen LED's wird hierbei gemessen, wobei die Regelung eine Vergleicherschaltung umfasst, um zu ermitteln, ob die einzelnen LED's bei Sonneneinstrahlung eine im Wesentlichen gleiche Spannung aufzeigen. Dies vor folgenden Hintergrund:

Es wurde bereits dargelegt, dass der lichtempfindliche Sensor um zwei Raumrichtungen beweglich auf z. B. der Halterung angeordnet ist. Die Beweglichkeit in zwei Raumrichtungen kann durch Stellmotoren eines Schwenkantriebs vorgenommen werden, durch die der Sensor an der Halterung befestigt ist. Das heißt, dass der lichtempfindliche Sensor nach Süden, nach Westen, nach Osten und nach Norden beweglich ist. Befindet sich der Sensor genau zentrisch zur Sonne, dann werden alle vier LED's die gleiche Spannung abgeben. Wird der Sensor verschwenkt, dann wird die Spannung an den LED's unterschiedlich sein, da sich die Einstrahlung auf die einzelnen LED's verändert hat. Hieraus folgt, dass ein oder mehrere LED's einer höheren Strahlungsintensität ausgesetzt sein werden als andere. Das heißt, die optimale Stellung des Sensors zur Sonne wird danach ermittelt, ob die vier LED's die gleiche Spannung bereitstellen. In diesem Zusammenhang ist ebenfalls vorgesehen, dass die LED's im Winkel von 90° zueinander stehen, wobei es sich als vorteilhaft herausgestellt hat, wenn die Ausrichtung des Sensors auf der Halterung derart ist, dass sich die LED's jeweils im Winkel von 45° zwischen den Himmelsrichtungen Nord, Süd, West und Ost befinden. Die Verarbeitung der Sensorsignale erfolgt durch einen Microcontroller.

Gegenstand der Erfindung ist ebenfalls ein Verfahren zum Betrieb eines Solartrackers nach einem der Ansprüche 1-19, wobei die Ausrichtung einer Mehrzahl von in dem Gestell eines Solartrackers angeordneten Konzentratormodule im Wesentlichen senkrecht zur Sonne durch die

Regelung erfolgt, die folgende Schritte umfasst, wobei hierbei davon ausgegangen wird, dass der Solartracker vor dem Einsetzen des nachstehend beschriebenen Regelungsverfahrens anhand des Kalenders und der Uhrzeit bereits auf 1° bis 2° genau zur Sonne ausgerichtet ist. Das nach einer solchen Grobausrichtung einsetzende Regelungsverfahren zur Feinausrichtung der einzelnen Konzentratormodule in eine Stellung senkrecht zur Sonne zeichnet sich im Einzelnen durch folgende Verfahrensschritte aus:

1. Das Gestell des Solartrackers wird derart zur Sonne ausgerichtet, dass der lichtempfindliche Sensor mindestens eines vorzugsweise im Zentrum des Gestells angeordneten Konzentratormoduls im Wesentlichen, d. h. mit einer Genauigkeit von ca. 0,05° senkrecht zur Sonne steht. Die Ausrichtung des Sensors und des Konzentratormoduls auf die Sonne ist gleich. Beide stehen in gleichem Winkel zueinander. Insofern kann auch vorgesehen sein, den Sensor starr am Konzentratormodul parallel zum Konzentratormodul ausgerichtet anzuordnen.

Hierbei wird weiterhin davon ausgegangen, dass sich das zentrische Konzentratormodul an dem Gestell im Bereich des Fußes befindet, der das Gestell trägt. Das heißt, in diesem Bereich ist das Gestell ideal steif. Das heißt allerdings auch, dass in diesem Bereich aufgrund des Gewichts des Gestells oder auch aufgrund von äußeren Einflüssen wie z. B. Temperatureinwirkungen oder auch Wind keine Verformungen stattfinden, weil, wie bereits ausgeführt, der Fuß das Gestell dort, also im Bereich des zentrisch in dem Gestell angeordneten Konzentratormoduls erfasst. Die entfernt von dem zentrischen Konzentratormodul angeordneten Konzentratormodule werden bereits aufgrund der seitlichen Auskragung des Gestells und des damit verbundenen "Durchhängens" des Gestells keine Stellung optimal zur Sonne aufweisen. Zudem ändert sich die Verformung des Gestells während des Betriebs durch die sich ständig ändernden statischen Randbedingung, z. B. dadurch, dass das Gestell horizontal liegt oder stark geneigt ist.

2. Ist nun insofern eine Ausrichtung des Gestells anhand insbesondere des zentrischen Konzentratormoduls vorgenommen worden, dann wird in einem zweiten Verfahrensschritt die erzeugte Leistung eines jeden Rezeptors, also beispielsweise eines Halbleiters eines Konzentratormoduls gemessen, und in einer Speichereinheit als Teil der Regelung als erster Leistungswert L1 zusammen mit einem ersten Positionswert P1 des jeweiligen Konzentratormoduls hinterlegt. Das heißt, es ist nunmehr gespeichert, bei welcher Stellung P1 des jeweiligen Konzentratormoduls welche Leistung L1 erzeugt wird.

3. Alsdann wird in einem dritten Verfahrensschritt der lichtempfindliche Sensor in kleineren Schritten von ca. 0,05° bis zu einem Maximalwinkel von ca. 3° in eine beliebige Richtung z. B. Himmelsrichtung verschwenkt. Es wurde bereits darauf hingewiesen, dass der lichtempfindliche Sensor in zwei Raumrichtungen beweglich auf der Halterung am Konzentratormodul angeordnet ist. Das heißt im dritten Schritt wird der lichtempfindliche Sensor um einen bestimmten Betrag in eine beliebige Richtung verschwenkt. Die Folge hiervon ist, dass dann nicht mehr sämtliche LED's des lichtempfindlichen Sensors die gleiche Spannung abgeben.

4. Als Folge hiervon wird von der Regelung in einem vierten Verfahrensschritt entsprechend dem Verstellwinkel des lichtempfindlichen Sensors aus Verfahrensschritt 3 das Konzentratormodul in die entgegengesetzte Himmelsrichtung durch die Stellmotoren des Konzentratormoduls um das Zweiachsengelenk relativ zum Gestell verschwenkt, bis der lichtempfindliche Sensor im Wesentlichen wieder senkrecht zur Sonne steht. Dies ist dann gegeben, wenn sämtliche LED's des lichtempfindlichen Sensors die gleiche Spannung bereitstellen. Das heißt, das Konzentratormodul hat eine Position P2 in dem Gestell eingenommen.

5. In einem fünften Verfahrensschritt wird dann die erzeugte Leistung L2 des Rezeptors des entsprechenden Konzentratormoduls gemessen, und mit dem in der Speichereinheit der Regelung abgespeicherten ersten Leistungswert L1 in einer Rechnereinheit verglichen, wobei in der Speichereinheit der Leistungswert L2 ebenso abgespeichert wird wie die Position P2 des Konzentratormoduls beim Leistungswert L2.

6. Wird nun in einem nächsten Verfahrensschritt bei einem Vergleich der beiden Leistungswerte L1 und L2 festgestellt, dass der Leistungswert L2 größer als der Leistungswert L1 ist, erfolgt eine weitere Verschwenkung des lichtempfindlichen Sensors in die gleiche Richtung wie beim zuvor beschriebenen Verfahrensschritt 3, mit einer entsprechenden Verstellung des Konzentratormoduls nach Verfahrensschritt 4.

7. Es wird dann in einem weiteren Verfahrensschritt die erzeugte Leistung L3 des Rezeptors des jeweiligen Konzentratormoduls gemessen, und in der Rechnereinheit der Regelung mit dem Leistungswert L2 verglichen. Ist der Leistungswert L3 größer als der Leistungswert L2, werden die Verfahrensschritte 6 und 7 wiederholt. Stellt sich hingegen heraus, dass der Leistungswert L3 kleiner als der Leistungswert L2 ist, dann erfolgt eine Rückstellung des Konzentratormoduls auf die Stellung gemäß Position P2 bei dem Leistungswert L2.

Zur weiteren Optimierung der Stellung der Konzentratormodule kann vorgesehen sein, in einem weiteren Verfahrensschritt, entsprechend dem Verfahrensschritt 3 eine Verschwenkung des Sensors in eine Richtung senkrecht zu der ersten Richtung vorzunehmen. Hieran würden sich die nachfolgenden Verfahrensschritte 4 bis 7 entsprechend anschließen. Aufgrund der Kombination der Verschwenkung in die beiden senkrecht zueinander stehenden Richtungen, wird eine optimale Ausrichtung eines jeden Konzentratormoduls zur Sonne erreicht.

Die Verschwenkung des lichtempfindlichen Sensors kann randomisiert erfolgen. Das heißt, der lichtempfindliche Sensor wird beispielsweise nach einem Zufallsprinzip z. B. in eine Himmelsrichtung nach Westen, nach Osten, nach Norden oder nach Süden ausgelenkt. Denkbar ist ebenfalls die Verschwenkung nach vorgegebenen Algorithmen, um die optimale Ausrichtung in möglichst kurzer Zeit sicherstellen.

Für die Erzielung eines hohen Wirkungsgrades ist allerdings auch erforderlich festzulegen, unter ggf. welchen weiteren Bedingungen oder bei welchen Ereignissen das zuvor beschriebene Regelungsverfahren in Kraft gesetzt wird. Es wurde bereits darauf hingewiesen, dass das Gestell eine Erstreckung von mehreren Quadratmetern aufweist. Insofern ist ein solches Gestell windempfindlich, d. h., dass nicht nur die Gewichtslast des Gestells als solchem Einfluss auf die Ausrichtung der Konzentratormodule hat, sondern beispielsweise auch der Wind oder auch Temperaturschwankungen, die bei dem Gestell für eine reversible oder irreversible Verformung sorgen. Insofern kann nach einem weiteren Merkmal der Erfindung vorgesehen sein, dass die Einleitung der zuvor beschriebenen Verfahrensschritte abhängig ist von definierten äußeren Ereignissen oder Einflüssen, wie Wind, Temperaturänderungen oder beispielsweise auch von durchgeführten Arbeiten am Solartracker. In diesem Zusammenhang ist insbesondere darauf hinzuweisen, dass nach der Montage des Solartrackers und nach der Montage der einzelnen Konzentratormodule in dem Gestell, die Justierung der jeweiligen Konzentratormodule auf die Sonne durch die Regelung selbstständig durchgeführt werden kann. Das heißt es ist nicht erforderlich jedes Konzentratormodul einzeln manuell absolut genau zur Sonne auszurichten, um möglicherweise dann nachher festzustellen, dass sich z. B. aufgrund von Temperaturschwankungen, die Lage verändert hat. Dies bringt eine große Zeitersparnis bei der Inbetriebnahme der Systeme mit sich.

Anhand der Zeichnungen wird die Erfindung nachstehend beispielhaft näher erläutert:

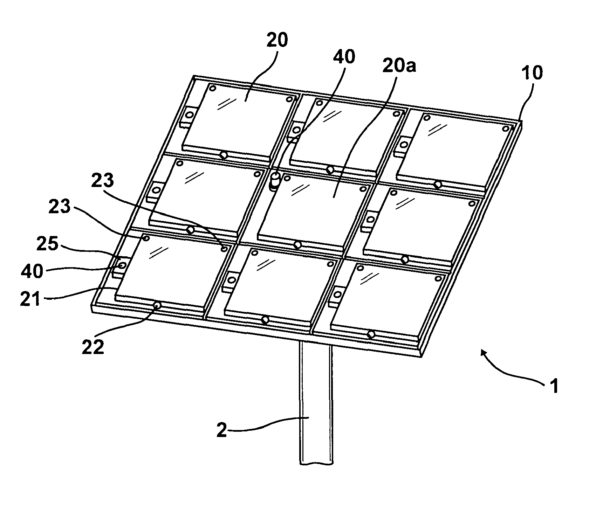

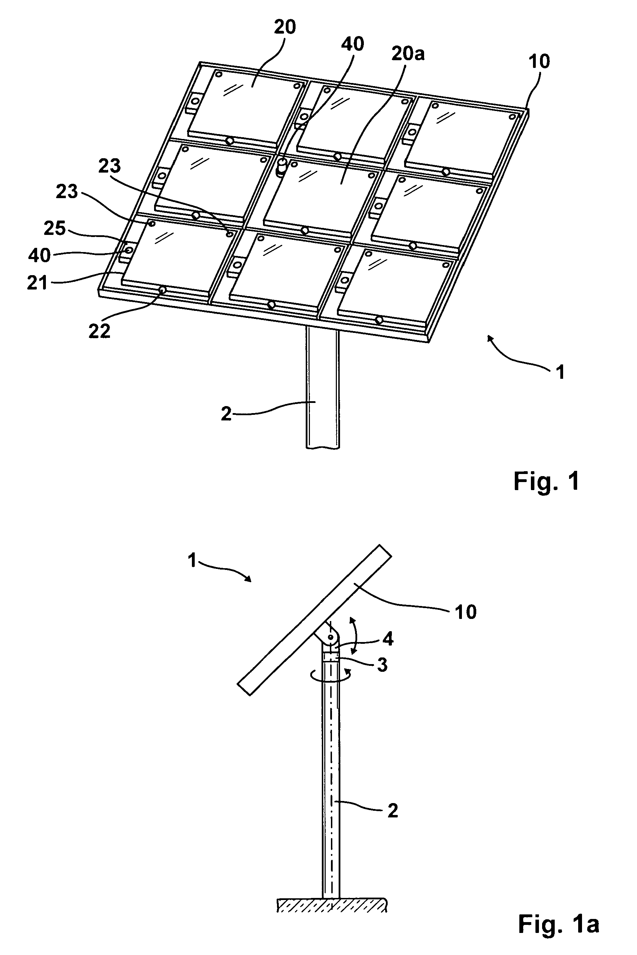

Fig. 1    zeigt schematisch einen Solartracker in perspektivischer Darstellung;

Fig. 1 a   zeigt eine Seitenansicht gemäß Fig. 1

Fig. 2    zeigt ein Konzentratormodul mit vier Fresnellinsen und entsprechend vier Rezeptoren;

Fig. 2a   zeigt ein Konzentratormodul mit einer Fresnellinse und entsprechend einem Rezeptor;

Fig. 3    zeigt eine Ansicht gemäß der Linie III-III aus Fig. 2;

Fig. 4    zeigt schematisch die Anordnung des lichtempfindlichen Sensors auf der Halterung des Konzentratormoduls in einer Seitenansicht entsprechend der Linie IV-IV aus Fig. 2;

Fig. 4a   zeigt schematisch einen Schnitt gemäß der Linie IVa-IVa aus Figur 4.

Fig. 5    zeigt den lichtempfindlichen Sensor in Alleinstellung in einer schematischen Darstellung in einer Seitenansicht;

Fig. 6    zeigt eine Ansicht gemäß der Linie VI-VI aus Fig. 5.

Der insgesamt mit 1 bezeichnete Solartracker umfasst den mit 2 bezeichneten Fuß und das mit 10 bezeichnete Gestell. Der Fuß steht hierbei mit dem Gestell 10 durch zwei Gelenke 3 und 4 in Verbindung, deren Achsen senkrecht zueinander stehen. Dies ist an sich bekannt, wobei über die vertikale Achse der Azimutwinkel eingestellt wird, und über die horizontale Achse die Neigung des Gestells 10 (Fig. 1 a). Das Gestell 10 ist als Rahmen ausgebildet, wobei der Rahmen mehrere, im vorliegenden Fall neun Konzentratormodule 20 aufnimmt. Das Gestell wird, nachdem es beispielsweise aufgrund von Kalender und Uhrzeit am Morgen auf 1° bis 2° grob ausgerichtet wurde, anhand des zentrischen Sensors am zentrischen Konzentratormodul auf ca. 0,05° genau senkrecht zur Sonne ausgerichtet. Hierauf wird an anderer Stelle noch näher eingegangen.

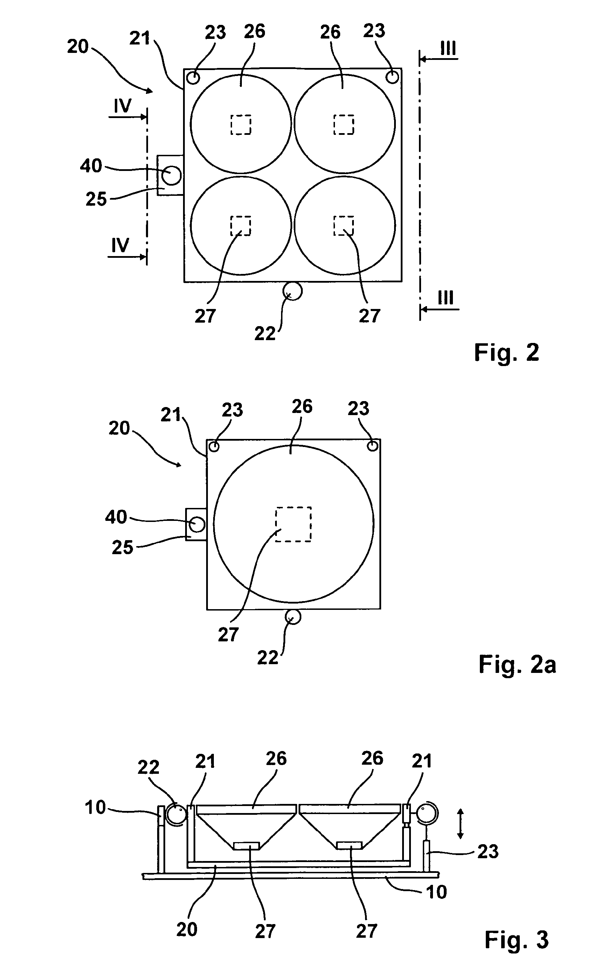

Ein jedes dieser Konzentratormodule umfasst ebenfalls einen Rahmen 21, wobei der Rahmen 21 durch ein Kugelgelenk 22 mit dem Gestell 10 in Verbindung steht. Der Rahmen 21 des Konzentratormoduls steht darüber hinaus durch zwei Stellmotoren 23 mit dem Gestell 10 in Verbindung. Das heißt, bei Ausfahren der Stellmotoren 23 kann der Rahmen 21 des Konzentratormoduls um das Kugelgelenk 22 in zwei Raumrichtungen verschwenkt werden. Am Rahmen 21 des Konzentratormoduls befindet sich darüber hinaus eine Halterung 25, an der der mit 40 bezeichnete lichtempfindliche Sensor angeordnet ist. Wie sich aus den Fig. 2 und 2a ergibt, kann das Konzentratormodul 20 unterschiedlich ausgeführt sein. Der Rahmen 21 des Konzentratormoduls kann z. B. vier Fresnellinsen 26 aufnehmen, wobei sich unter jeder Fresnellinse 26 in einem vorgegebenen Abstand der Rezeptor 27 befindet, wie sich das in Anschauung von Fig. 3 darstellt. Denkbar ist allerdings auch, dass ein Konzentratormodul genau eine Fresnellinse 26 aufweist, mit dem darunter befindlichen Rezeptor 27, wie sich dies in Anschauung von Fig. 2a ergibt. Der Rezeptor kann hierbei wie bereits verschiedentlich ausgeführt ein Halbleiter sein, oder auch ein Solar-Thermieelement. Wesentlich bei der Erfindung ist ausschließlich, dass die einzelnen Konzentratormodule, sei es, dass ein Konzentratormodul eine oder mehrere Fresnellinsen mit der entsprechenden Anzahl von Rezeptoren aufweist, im Wesentlichen senkrecht zur Sonne ausgerichtet werden können und zwar mit einem minimalem Fehler von ca. 0,05°.

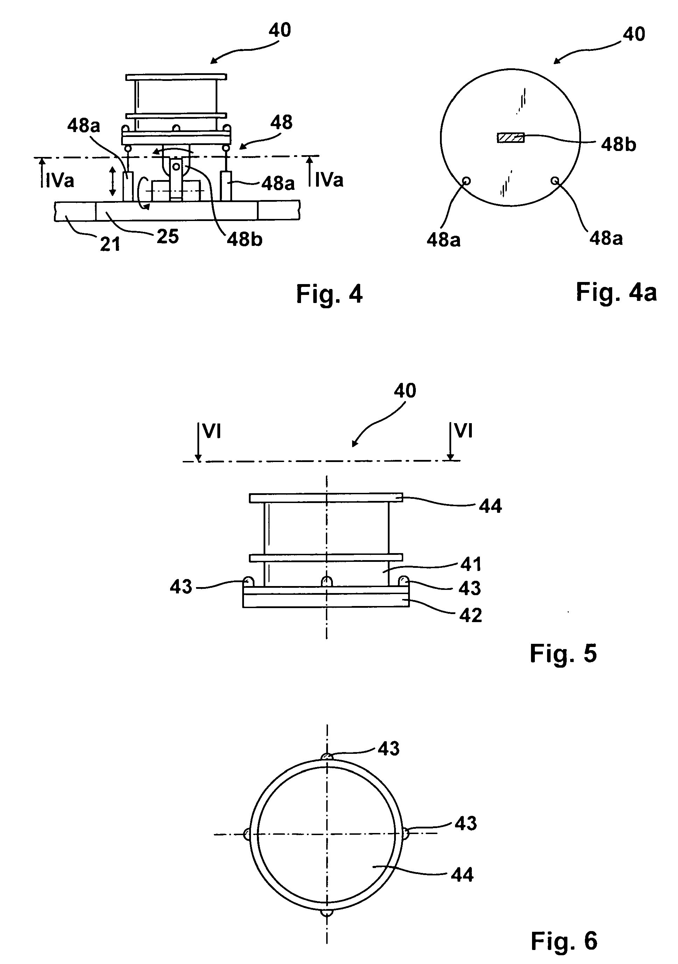

Hierzu dient auch der am Konzentratormodul 20 angeordnete lichtempfindliche Sensor 40. Der lichtempfindliche Sensor 40 befindet sich auf der Halterung 25, wobei der lichtempfindliche Sensor 40 um zwei horizontale Achsen durch eine entsprechende Schwenkeinrichtung 48 auf der Halterung in sämtliche Himmelsrichtungen um max. 3° verschwenkbar angeordnet ist. Die Schwenkeinrichtung umfasst wiederum Stellmotoren 48a und eine um zwei Achsen gelenkige Lagerung 48b auf der Halterung 25. Die Ausbildung des Sensors 40 ergibt sich in Anschauung von Fig. 5. Der lichtempfindliche Sensor 40 umfasst einen Grundkörper 41, wobei der Grundkörper eine Grundplatte 42 umfasst, auf der vier LED's 43 im Winkel von 90° angeordnet sind. Über den LED's befindet sich ein Teller 44, der so groß gewählt ist, und in einem solchen Abstand zu den LED's steht, dass diese vor direkter Sonneneinstrahlungen fast vollständig geschützt sind. Das heißt die Größe des Tellers 44 ist derart gewählt, dass die Sonne selbst nahezu abgedeckt wird. Befindet sich somit der lichtempfindliche Sensor genau senkrecht zur Sonne, dann werden alle LED's, die seitlich minimal um 0,2 mm über den Teller 44 überstehen, in gleicher Weise mit der Strahlung der Sonne beaufschlagt. Bezeichnet man die LED's mit West, Ost, Süd, Nord, so gilt für die einzelnen Spannungen der LED's:

$$\sum W + O = \sum S + N$$

$$\sum W + S = \sum O + N$$

$$\sum W + N = \sum S + O$$

Das heißt, die Spannung, die die LED's abgeben, soll im Wesentlichen gleich sein. Das bedeutet, dass in dieser Stellung der Sensor 40, bis auf einen Fehler von 0,05°, genau senkrecht zur Sonne steht. Wird der Sensor hingegen verschwenkt, und zwar durch den Stellantrieb 48 auf der Halterung 25, dann werden ein oder mehrere LED's einer höheren Sonneneinstrahlung ausgesetzt, mit der Folge, dass die LED's eine unterschiedliche Spannung erzeugen. Der Sensor befindet sich dann nicht mehr genau senkrecht zur Sonne. Für die Ausrichtung des Solartrackers 1 und der Konzentratormodule 20 genau senkrecht zur Sonne wird nun wie folgt verfahren:

Anhand des Kalenders und der Uhrzeit wird das Gestell 10 durch die beiden Gelenke 3 und 4 am Fuß 2 zur Sonne mit einer Genauigkeit von etwa 1° bis 2° ausgerichtet. Dies erfolgt beispielsweise am Morgen oder nach einem anderen bestimmten zu definierenden Ereignis. Am zentrischen Konzentratormodul 20a befindet sich ein lichtempfindlicher Sensor 40, genauso wie dies bei den anderen Konzentratormodulen 20 der Fall ist. Über diesen lichtempfindlichen Sensor 40 am Konzentratormodul 20a wird das gesamte Gestell 10 mit den darin befindlichen Konzentratormodulen 20 zur Sonne ausgerichtet, bis der lichtempfindliche Sensor 40 am zentrischen Konzentratormodul 20a die gleiche Leistung sämtlicher LED's anzeigt. Da der lichtempfindliche Sensor 40 fest am zentrischen Konzentratormodul 20a angeordnet ist, wird dies zur Folge haben, dass auch das Konzentratormodul 20a eine im Wesentlichen optimale Stellung zur Sonne einnimmt, d. h. mit einer Abweichung von maximal 0,05° zur Sonne ausgerichtet ist, wenn sowohl das Konzentratormodul als auch der lichtempfindliche Sensor in identischer Weise ausgerichtet sind. Das Nachführen des Gestells erfolgt in regelmäßigen zeitlichen Abständen. Die Erde bewegt sich in 24 Std. um 360°, was 0,25°/Min. entspricht. Soll der Fehler der Abweichung des zentrischen Sensors nicht mehr als 0,05° betragen, muss das Gestell ca. alle 10 Sek. nachgefahren werden.

Die übrigen Konzentratormodule 20, die um das zentrische Konzentratormodul 20a herum in dem Gestell 10 angeordnet sind, werden aber aufgrund beispielsweise des Eigengewichts des Gestelles 10 oder auch aufgrund äußerer Einflüsse oder beispielsweise auch nach der Erstmontage eine Stellung zur Sonne einnehmen, die von den vorgegebenen 0,05° abweicht. Es ist insofern erforderlich, dass die einzelnen Konzentratormodule jeweils für sich relativ zum Gestell und relativ zu den übrigen Konzentratormodulen zur Sonne ausgerichtet werden, mit dem Ziel, dass auch diese mit einer Abweichung von maximal 0,05° zur Sonne stehen.

Die Konzentratormodule 20 sind am Gestell 10 durch ein Kugelgelenk 22 angelenkt, also eine um zwei Raumachsen bewegliche Befestigung. Darüber hinaus weist das Gestell 10 jedem Konzentratormodul 20 zwei Stellmotoren 23 zu, die beabstandet zueinander am Gestell 10 angeordnet sind, wie dies bereits beschrieben wurde, und wie sich dies schematisch auch aus der Fig. 3 ergibt. Durch Verstellen der Stellmotoren 23 besteht nunmehr die Möglichkeit, das Konzentratormodul auszurichten, und zwar durch Verschwenkung um das Kugelgelenk 22 herum. Ein jedes Konzentratormodul weist darüber hinaus, starr mit dem Konzentratormodul verbunden, eine Halterung 25 auf, wobei auf der Halterung 25 der lichtempfindliche Sensor um zwei horizontale senkrecht zueinander stehende Achsen relativ zur Halterung verstellbar angeordnet ist, wie dies ebenfalls bereits beschrieben wurde. Zur Feinausrichtung eines jeden Konzentratormoduls 20 wird nun nach der Einstellung des Gestells über das zentrische Konzentratormodul 20a mit dem daran angeordneten lichtempfindlichen Sensor 40 zunächst die Leistung eines jeden Konzentratormoduls 20 ermittelt. Das Konzentratormodul umfasst hierbei mindestens eine Fresnellinse sowie mindestens einen Rezeptor, oder mehrere insbesondere vier Fresnellinsen und entsprechend vier Rezeptoren, beispielsweise in Form eines Halbleiters. Es wird die Leistung des oder der Rezeptoren eines solchen Konzentratormoduls gemessen. Dieser Leistungswert L1 wird zusammen mit einer ersten Positionsangabe P1 des jeweiligen Konzentratormoduls in einer Speichereinheit der Regelung hinterlegt. Der lichtempfindliche Sensor 40 wird alsdann in eine beliebige Raumrichtung, also z. B. nach Süden, Westen, Osten oder Norden durch den Stellantrieb auf der Halterung verschwenkt. Über die entsprechende Regelung ist vorgegeben, dass dieser lichtempfindliche Sensor sich immer senkrecht zur Sonne befinden soll, d. h., die vier LED's sollen immer die gleiche Spannung abgeben. Ist dies nicht der Fall, dann werden über die Regelung die Stellmotoren 23 des jeweiligen Konzentratormoduls angesprochen, wobei über die Stellmotoren 23 das Konzentratormodul entgegen der Ausrichtung des lichtempfindlichen Sensors verschwenkt wird, und zwar soweit, bis der lichtempfindliche Sensor im Wesentlichen senkrecht zur Sonne steht, die vorige Verstellung des Sensors auf der Halterung also kompensiert ist. Alsdann wird wiederum die Leistung des jeweiligen Konzentratormoduls gemessen und als Leistungswert L2 in der Speichereinheit der Regelung hinterlegt, und zwar zusammen mit der Position P2 des Konzentratormoduls. Stellt sich nun heraus, dass der Leistungswert L2 größer als der Leistungswert L1 ist, erfolgt eine weitere Verschwenkung des lichtempfindlichen Sensors in die gleiche Richtung wie in dem zuvor beschriebenen Verfahrensschritt, mit der nachfolgenden entsprechenden Verstellung des Konzentratormoduls. Es wird dann wiederum die Leistung des Konzentratormoduls als Leistungswert L3 gemessen und ggf. zusammen mit dem Positionswert P3 in der Speichereinheit abgelegt. Ergibt sich nun, dass der Leistungswert L3 größer als der Leistungswert L2 ist, werden die zuvor beschriebenen Verfahrensschritte wiederholt, d. h. der lichtempfindliche Sensor wird weiter in die entsprechende Richtung verschwenkt, und das Konzentratormodul wird entsprechend nachgeführt. Stellt sich hingegen heraus, dass der Leistungswert L3 kleiner als der Leistungswert L2 ist, dann erfolgt eine Rückstellung des Konzentratormoduls auf die Stellung der Position P2 bei dem entsprechenden Leistungswert L2. Alsdann kann eine Verschwenkung des Sensors in eine zur ersten Raumrichtung senkrecht stehende Raumrichtung erfolgen, um auch hierüber die optimale Stellung des Konzentrationsmoduls sicherzustellen.

Hieraus wird deutlich, dass zum einen das Gestell 10 mit hinreichender Genauigkeit zur Sonne ausgerichtet wird, wobei durch den Sensor am zentrischen Konzentratormodul die Nachführung des Gestells 10 erfolgt. Außerdem erfolgt die Ausrichtung der einzelnen Konzentratormodule durch den jedem Konzentratormodul zugeordneten Sensor. Die Ansteuerung der Motoren sowohl des Gestells als auch der Stellmotoren des Konzentratormoduls kann, z. B. pulsweitenmoduliert erfolgen, nachdem das analoge Signal des lichtempfindlichen Sensors in ein digitales Signal umgewandelt wurde. Um schnell reagieren zu können, weist die PWM eine Beschleunigungsrampe auf.

Als Ergebnis des obigen Verfahrens wird nicht nur eine sehr genaue Ausrichtung des Hauptgestells, sondern ebenso eine genaue Ausrichtung der in der Darstellung gezeigten neun Konzentratormodule erreicht, also insgesamt eine genaue Ausrichtung der gesamten Einheit.

Bezugszeichenliste:

| 1 | Solartracker |
|---|---|
| 2 | Fuß |
| 3 | Gelenk |
| 4 | Gelenk |
| 10 | Gestell |
| 20 | Konzentratormodul |
| 20a | zentrisches Konzentratormodul |
| 21 | Rahmen |
| 22 | Kugelgelenk |
| 23 | Stellmotoren |
| 25 | Halterung |
| 26 | Fresnellinse |
| 27 | Rezeptor (z. B. CPV) |
| 40 | lichtempfindlicher Sensor |
| 41 | Grundkörper |
| 42 | Grundplatte |
| 43 | LED |
| 44 | Teller |
| 48 | Stellantrieb |

**Patentansprüche**

1. **Solartracker** umfassend einen Fuß (2) sowie ein mit dem Fuß (2) verbundenes Gestell (10), wobei das Gestell durch den Fuß motorbetrieben in zwei Raumrichtungen beweglich aufgenommen ist, wobei das Gestell (10) mehrere Konzentratormodule (20, 20a) aufnimmt, wobei ein jedes Konzentratormodul zur individuellen Ausrichtung zur Sonne unabhängig von den benachbarten Konzentratormodulen in zwei Raumrichtungen beweglich in dem Gestell (10) angeordnet ist.

2. **Solartracker** nach Anspruch 1, **dadurch gekennzeichnet,**

**dass** das Konzentratormodul (20) durch ein Zwei-Achsengelenk (22) mit dem Gestell (10) in Verbindung steht.

3. **Solartracker** nach Anspruch 1,
**dadurch gekennzeichnet,**
**dass** einer Mehrzahl der Konzentratormodule (20) mindestens jeweils zwei Stellmotoren (23) in dem Gestell (10) zugeordnet sind, um das Konzentratormodul (20) um das Zwei-Achsengelenk (22) in dem Gestell (10) zu verstellen.

4. **Solartracker** nach Anspruch 3,
**dadurch gekennzeichnet,**
**dass** das Zwei-Achsengelenk (22) als Kugelgelenk ausgebildet ist.

5. **Solartracker** nach einem der voranstehenden Ansprüche,
**dadurch gekennzeichnet,**
**dass** der Fuß (2) mit dem Gestell (10) durch zwei Gelenke (3, 4) verbunden ist, deren Achsen senkrecht zueinander stehen.

6. **Solartracker** nach einem der voranstehenden Ansprüche,
**dadurch gekennzeichnet,**
**dass** das Konzentratormodul (20, 20a) mindestens eine Linse (26) zur Fokussierung des auftreffenden Lichts auf mindestens eine im Brennpunkt der Linse (26) angeordneten Rezeptor (27) aufweist.

7. **Solartracker** nach Anspruch 6,
**dadurch gekennzeichnet,**
**dass** die Linse (26) als Fresnellinse ausgebildet ist.

8. **Solartracker** nach Anspruch 6 oder 7,
**dadurch gekennzeichnet,**
**dass** der Rezeptor (27) als Photovoltaikmodul ausgebildet ist.

9. **Solartracker** nach Anspruch 6 oder 7,
**dadurch gekennzeichnet,**
**dass** der Rezeptor (27) als Solar-Thermieelement zur Erhitzung einer Flüssigkeit oder eines Gases ausgebildet ist.

10. **Solartracker** nach einem der voranstehenden Ansprüche,
**dadurch gekennzeichnet,**
**dass** jedem Konzentratormodul (20, 20a) ein lichtempfindlicher Sensor (40) zugeordnet ist, der durch eine Regelung mit den Stellmotoren (23) des Konzentratormoduls (20) in Verbindung steht.

11. **Solartracker** nach Anspruch 10,
**dadurch gekennzeichnet,**
**dass** der lichtempfindliche Sensor (40) mit dem Konzentratormodul (20, 20a) in Verbindung steht.

12. **Solartracker** nach einem der Ansprüche 10 oder 11
**dadurch gekennzeichnet,**
**dass** der lichtempfindliche Sensor (40) durch eine Schwenkeinrichtung (48) mit zwei senkrecht zueinander stehenden Achsen relativ zum Konzentratormodul (20) verstellbar ist.

13. **Solartracker** nach einem der Ansprüche 10 bis 12,
**dadurch gekennzeichnet,**
**dass** der lichtempfindliche Sensor (40) durch eine Halterung (25) starr mit dem Konzentratormodul (20, 20a) verbunden ist.

14. **Solartracker** nach einem der Ansprüche 12 oder 13
**dadurch gekennzeichnet,**
**dass** die Regelung mit der Schwenkeinrichtung (48) für den lichtempfindlichen Sensor (40) in Verbindung steht.

15. **Solartracker** nach einem der Ansprüche 10 bis 14,
**dadurch gekennzeichnet,**
**dass** der lichtempfindliche Sensor (40) einen Grundkörper (11) zur Aufnahme von mehreren LED's (43) aufweist, wobei die LED's (43) vorzugsweise durch mindestens einen Teller (44) zumindest über einen größeren Teil ihrer räumlichen seitlichen Erstreckung abgedeckt sind, wobei der Teller (44) über den LED's beabstandet zu den LED's (43) angeordnet ist.

16. **Solartracker** nach Anspruch 15,
**dadurch gekennzeichnet,**
**dass** die Größe des Tellers (44) derart gewählt ist, dass bei genau zentrischer Ausrichtung des Tellers (44) auf die Sonne der Teller die Sonne bezogen auf die LED's im Wesentlichen abdeckt.

17. **Solartracker** nach Anspruch 15 oder 16,
**dadurch gekennzeichnet,**
**dass** die Leistung der einzelnen LED's (43) bei Einstrahlung der Sonne messbar ist.

18. **Solartracker** nach einem der Ansprüche 15 bis 17
**dadurch gekennzeichnet,**
**dass** der lichtempfindliche Sensor (40) vier LED's (43) aufweist, die im Winkel von jeweils 90° zueinander auf dem Grundkörper (41) angeordnet sind.

19. **Solartracker** nach einem der Ansprüche 15 bis 18,
**dadurch gekennzeichnet,**
**dass** der lichtempfindliche Sensor (40) derart an der Halterung (25) angeordnet ist, dass sich die LED's (43) jeweils im Winkel von 45° zu den Hauptachsen des Gestells befinden.

20. Verfahren zum Betrieb eines Solartrackers nach einem der Ansprüche 1 bis 19, wobei die Ausrichtung einer Mehrzahl von in dem Gestell (10) des Solartrackers (1) angeordneten Konzentratormodulen (20) im Wesentlichen senkrecht zur Sonne durch die Regelung erfolgt, die folgende Schritte umfasst:

1. Das Gestell (10) des Solartrackers (1) wird derart zur Sonne ausgerichtet, dass der lichtempfindliche Sensor (40) mindestens eines vorzugsweise im Zentrum des Gestells (10) angeordneten Konzentratormoduls (20a) im Wesentlichen senkrecht zur Sonne steht.

2. Es wird die erzeugte Leistung (L1) eines jeden Rezeptors (27) eines Konzentratormoduls (20) gemessen und in einem Speicher als Teil der Regelung als erster Leistungswert L1 zusammen mit einem ersten Positionswert P1 des jeweiligen Konzentratormoduls (20) hinterlegt.

3. Der lichtempfindliche Sensor wird in kleinen Winkelschritten um bis zu max. 3° im Rahmen der Regelung in eine Richtung verschwenkt;

4. Entsprechend dem Verstellwinkel aus Verfahrensschritt 3 wird das Konzentratormodul (20) in die entgegengesetzte Himmelsrichtung zu Verfahrensschritt 3 durch die Stellmotoren (23) des Konzentratormoduls (20) um das Zwei-Achsengelenk (22) relativ zum Gestell (10) verschwenkt, bis der lichtempfindliche Sensor (40) im Wesentlichen senkrecht zur Sonne steht;

5. Es wird die erzeugte Leistung L2 des Rezeptors des jeweiligen Konzentratormoduls (20) gemessen, und mit dem in der Speichereinheit abgespeicherten ersten Leistungswert L1 in einer Rechnereinheit verglichen, und in der Speichereinheit als Leistungswert L2 ebenso abgespeichert wie die Position P2 des Konzentratormoduls (20) beim Leistungswert L2;

6. Ist der Leistungswert L2 größer als der Leistungswert L1 erfolgt eine weitere Verschwenkung des lichtempfindlichen Sensors (40) in die gleiche Richtung wie in Verfahrensschritt 3 mit der entsprechenden Verstellung des Konzentratormoduls (20) nach Verfahrensschritt 4;

7. Es wird die erzeugte Leistung des Rezeptors des jeweiligen Konzentratormoduls als Leistungswert L3 gemessen und in einer Rechnereinheit der Regelung mit dem Leistungswert L2 verglichen;

8. Ist der Leistungswert L3 größer als der Leistungswert L2 werden die Verfahrensschritte 6 und 7 wiederholt; ist der Leistungswert L3 kleiner als der Leistungswert L2 dann erfolgt eine Rückstellung des Konzentratormoduls (20) auf die Stellung gemäß Position P2 bei dem Leistungswert L2.

21. Verfahren nach Anspruch 20,

**dadurch gekennzeichnet,**
**dass** die Verschwenkung des lichtempfindlichen Sensors (40) gemäß Verfahrensschritt 3 in eine Richtung senkrecht dazu vorgenommen wird.

22. Verfahren nach Anspruch 20,
**dadurch gekennzeichnet,**
**dass** die Einleitung der Verfahrensschritte gemäß Anspruch 20 zur Ausrichtung des jeweiligen Konzentratormoduls (20) abhängig ist von definierten äußeren Einflüssen wie Wind, Hitze oder Arbeiten am Solartracker.

Fig. 1

Fig. 1a

**Fig. 2**

**Fig. 2a**

**Fig. 3**

**Fig. 4**

**Fig. 4a**

**Fig. 5**

**Fig. 6**

**Europäisches Patentamt**
**European Patent Office**
**Office européen des brevets**

## EUROPÄISCHER RECHERCHENBERICHT

**Nummer der Anmeldung**

EP 11 00 3403

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/152343 A1 (SOLERGY INC [US]; BANIN YOAV [US]; D OVIDIO GINO [IT]; LANZARA GIOVANN) 17. Dezember 2009 (2009-12-17) | 1-5, 8-11,13, 15,17, 18,20-22 | INV. F24J2/54 F24J2/38 |
| Y | * Absatz [0052] - Absatz [0064]; Abbildungen 2,3 * <br> * Absatz [0094]; Abbildung 14 * <br> * Absätze [0047], [0080], [0095]; Anspruch 40 * <br> ----- | 12,14 | |
| Y | US 4 396 006 A (CROSS JR ROGER H [US]) 2. August 1983 (1983-08-02) <br> * Anspruch 1; Abbildungen * <br> ----- | 12,14 | |
| X | US 4 205 661 A (CHAPMAN MARCUS R [US]) 3. Juni 1980 (1980-06-03) <br> * Seite 2, Zeile 62 - Seite 4, Zeile 40; Abbildungen 1-3 * <br> * Spalte 6, Zeile 16 - Zeile 26; Abbildung 4 * <br> ----- | 1,5,6,9 | |
| X | US 4 566 432 A (SOBCZAK ISIDORE F [US] ET AL) 28. Januar 1986 (1986-01-28) <br> * Spalte 3, Zeile 53 - Zeile 56; Abbildungen * <br> ----- | 1,2,5 | **RECHERCHIERTE SACHGEBIETE (IPC)** <br><br> F24J |

Der vorliegende Recherchenbericht wurde für alle Patentansprüche erstellt

| Recherchenort | Abschlußdatum der Recherche | Prüfer |
|---|---|---|
| Den Haag | 27. September 2011 | Mootz, Frank |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

EP 2 515 052 A1

**ANHANG ZUM EUROPÄISCHEN RECHERCHENBERICHT
ÜBER DIE EUROPÄISCHE PATENTANMELDUNG NR.**

EP 11 00 3403

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-2011

| Im Recherchenbericht angeführtes Patentdokument | Datum der Veröffentlichung | Mitglied(er) der Patentfamilie | Datum der Veröffentlichung |
|---|---|---|---|
| WO 2009152343 A1 | 17-12-2009 | AU 2009257359 A1<br>CA 2727696 A1<br>EP 2310765 A1<br>US 2011094565 A1 | 17-12-2009<br>17-12-2009<br>20-04-2011<br>28-04-2011 |
| US 4396006 A | 02-08-1983 | KEINE | |
| US 4205661 A | 03-06-1980 | KEINE | |
| US 4566432 A | 28-01-1986 | KEINE | |

EPO FORM P0461

Für nähere Einzelheiten zu diesem Anhang : siehe Amtsblatt des Europäischen Patentamts, Nr.12/82

15